# EUROPÄISCHE PATENTSCHRIFT

(11) **EP 3 394 938 B1**
(45) Veröffentlichungstag und Bekanntmachung des Hinweises auf die Patenterteilung: **19.06.2024**
(21) Anmeldenummer: 16828936.1
(22) Anmeldetag: 20.12.2016
(51) Int. Cl.: H01S 3/00, H01S 3/23

(54) **OPTISCHE ANORDNUNG**
OPTICAL ARRANGEMENT
DISPOSITIF OPTIQUE

(30) Priorität: 23.12.2015 DE 102015122734
(43) Veröffentlichungstag der Anmeldung: 31.10.2018
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: MÜLLER, Michael, 07745 Jena (DE); KIENEL, Marco, 08058 Zwickau (DE); KLENKE, Arno, 07747 Jena (DE); LIMPERT, Jens, 07751 Jena (DE); TÜNNERMANN, Andreas, 99425 Weimar (DE)
(74) Vertreter: Schneiders & Behrendt Bochum
(86) Internationale Anmeldenummer: PCT/EP2016/081976
(87) Internationale Veröffentlichungsnummer: WO 2017/108825

(56) Entgegenhaltungen:
- WO-A1-2015/095751
- MARCO KIENEL ET AL: "Multidimensional coherent pulse addition of ultrashort laser pulses", OPTICS LETTERS, OPTICAL SOCIETY OF AMERICA, Bd. 40, Nr. 4, 15. Februar 2015 (2015-02-15), Seiten 522-525, XP001593955, ISSN: 0146-9592, DOI: 10.1364/OL.40.000522 [gefunden am 2015-02-06]
- YOANN ZAOUTER ET AL: "Femtosecond fiber chirped- and divided-pulse amplification system", OPTICS LETTERS, OPTICAL SOCIETY OF AMERICA, Bd. 38, Nr. 2, 15. Januar 2013 (2013-01-15), Seiten 106-108, XP001580270, ISSN: 0146-9592, DOI: HTTP://DX.DOI.ORG/10.1364/OL.38.000106
- HABOUCHA A ET AL: "Optical-fiber pulse rate multiplier for ultralow phase-noise signal generation", OPTICS LETTERS, OPTICAL SOCIETY OF AMERICA, Bd. 36, Nr. 18, 15. September 2011 (2011-09-15), Seiten 3654-3656, XP001569433, ISSN: 0146-9592, DOI: 10.1364/OL.36.003654 [gefunden am 2011-09-14]

## Beschreibung

Die Erfindung betrifft eine optische Anordnung zur Überlagerung einer Sequenz zeitlich äquidistant folgender Lichtpulse innerhalb eines Lichtstrahls zu einem einzelnen Lichtpuls mit
- einem Aufteilungselement, das einen Lichtstrahl in zwei Teilstrahlen aufteilt,
- zwei räumlich voneinander getrennten optischen Elementen, wobei durch jedes der optischen Elemente jeweils einer der Teilstrahlen propagiert, und
- einem Kombinationselement, das die Teilstrahlen in einem Strahl räumlich überlagert.

Außerdem betrifft die Erfindung ein Verfahren zur Erhöhung der Pulsenergie von Lichtpulsen. Lichtpulse werden im Folgenden Pulse genannt.

Aufgrund von physikalischen und technischen Limitierungen sind gepulste Lasersysteme bezüglich der Pulsenergien, der Pulsspitzenleistungen und der mittleren Leistung der emittierten Pulse begrenzt. Zu diesen Limitierungen gehören unter anderem die Zerstörung von Komponenten des Systems durch die hohen Intensitäten bzw. Fluenzen der Pulse. Daneben können nichtlineare Effekte wie die Selbstphasenmodulation die zeitliche Form des Pulses verändern, was einen negativen Einfluss auf Parameter wie z.B. die Pulslänge haben kann und in Hinblick auf die gewünschte Anwendung zu einer Unbrauchbarkeit führen kann.

Dabei sind im Stand der Technik bereits mehrere Ansätze zur Vermeidung dieser Leistungslimitierungen beschrieben:

### A) Reduzierung der Spitzenintensität durch Vergrößerung des Pulses bzw. Laserstrahls in zeitlicher bzw. räumlicher Dimension

Die Spitzenintensität des Pulses kann durch eine Vergrößerung des Laserstrahls beim Durchgang durch die Komponenten des Systems verringert werden [1]. Dazu gehört im Bereich der Faserlaser die Vergrößerung des Kerndurchmessers für den Signalstrahl. Zusätzlich ist eine zeitliche Streckung der Pulse mit Hilfe des Chirped-Pulse-Amplification (CPA) Konzepts [2] möglich, was neben einer Reduzierung der Spitzenintensität auch eine Reduzierung der Spitzenleistung möglich macht.

### B) Benutzung von zirkularer Polarisation

Durch Verwendung von zirkularer Polarisation kann der effektive nichtlineare Koeffizient im Material reduziert werden, was den Einfluss von nichtlinearen Effekten auf den Puls reduziert [3].

### C) Benutzung von räumlicher Pulsaufteilung sowie -kombination

Bei diesem Verfahren wird ein Puls in mehrere räumlich getrennte Pulse aufgeteilt, die in den jeweiligen Kanälen z.B. in jeweils einem optischen Verstärker einzeln verstärkt [4] oder spektral verbreitert werden [5]. Nach diesem Prozess findet eine kohärente Kombination in einen einzelnen Strahl bzw. einzelnen Puls statt. Die Durchschnittsleistung des kombinierten Laserstrahls sowie die Energie der kombinierten Pulse können dabei erheblich über den Limitierungen liegen, die von einem einzelnen Kanal vorgegeben werden.

### D) Benutzung von zeitlicher Pulsaufteilung sowie -kombination

Beim Divided-Pulse-Amplification (DPA) Konzept, wird ein Eingangspuls vor der Verstärkung in einem optischen Verstärker in mehrere zeitlich getrennte Replikate aufgeteilt. Diese werden einzeln zeitlich hintereinander verstärkt [6] bzw. spektral verbreitert [7]. Darauffolgend werden die einzelnen Replikate wieder zu einem einzigen Puls kombiniert. Der resultierende Puls kann daher Pulsparameter aufweisen, die über den Limitierungen der Komponenten des Lasersystems (mit Ausnahme des Kombinationselementes selbst) für einen einzigen Puls liegen.

### E) Benutzung eines Überhöhungsresonators

In einem Überhöhungsresonator werden mehrere Pulse eines von einem Lasersystem emittierten Pulszugs zeitlich überlagert [8]. Innerhalb dieses Resonators entsteht dadurch ein umlaufender Puls, der gegenüber den Eingangspulsen deutlich erhöhte Pulsspitzenleistungen und Pulsenergien aufweisen kann.

### F) Benutzung von Gires-Tournois Interferometern geringer Güte

In einer Abfolge optischer Resonatoren geringer Güte kann eine Sequenz von Lichtpulse innerhalb eines Lichtstrahles zeitlich überlagert werden [9]. Die relative optische Phase der Lichtpulse muss durch ein optisches Phasenstellglied von Puls zu Puls eingestellt werden. In diesem Verfahren entsteht immer ein Vorpuls relativ zum zeitlich überlagerten Puls. Der überlagerte Puls kann Pulsparameter aufweisen, die über den Limitierungen der Komponenten des Lasersystems (mit Ausnahme der Kombinationselemente selbst) liegt.

Die Erfindung betrifft eine Verbesserung der heute bekannten Ansätze zu DPA (Siehe D). Bei diesen Ansätzen findet an einer Stelle des Lasersystems eine Aufteilung eines einzelnen Pulses in einen Pulszug statt. Gefolgt wird diese von einem optischen Verstärker oder einer Vorrichtung zur spektralen Verbreiterung der Pulse. Schlussendlich werden die Pulse wieder zu einem einzelnen Ausgangspuls kombiniert. Um diese Kombination erfolgreich zu realisieren, müssen die Pulse einen möglichst großen zeitlichen Überlapp besitzen und ihre Phase muss (Modulo 2π) übereinstimmen. Ist dies nicht der Fall, so kommt es zu einer Reduktion der Kombinationseffizienz. Kombinationseffizienz ist dabei definiert als das Verhältnis der Leistung im erzeugten Puls zu der gesamten emittierten Leistung des Lasersystems. Die Systeme können in passiv stabilisierte Systeme und in aktive stabilisierte Systeme eingeteilt werden. Bei Ersteren wird zum Aufteilen der Pulse derselbe Aufbau wie zur Kombination benutzt, z.B. durch einen Doppeldurchgang [10]. Da in der Summe jedes der Pulsreplikate von der Aufteilung bis zur Kombination denselben Weg durchläuft, sind die jeweiligen Weglängen intrinsisch gleich und die Pulse damit phasengleich, sofern sie nicht durch weitere Effekte bei der Pulspropagation (z.B. durch Dispersion oder nichtlineare Effekte) unterschiedlich beeinflusst werden. Allerdings ist es nur begrenzt möglich die Pulsreplikate einzeln zu beeinflussen. Werden unterschiedliche Aufbauten für die Aufteilung und Kombination verwendet, so ist eine aktive Stabilisierung notwendig um die Weglängen im Aufteilungs- und Kombinationsschritt entsprechend abzugleichen [11]. Hier ist nun eine Beeinflussung der einzelnen Pulsreplikate möglich um z.B. Sättigungseffekten in optischen Verstärkern entgegenzuwirken und dadurch eine bessere Kombinationseffizienz zu erreichen. Allerdings steigt die Anzahl der benötigten Komponenten entsprechender Aufbauten im Vergleich zum passiv stabilisierten Fall stark an. Marco Kienel et al., "Multidimensional coherent pulse addition of ultrashort laser pulses", OPTICS LETTERS, Bd. 40, Nr. 4, 15. Februar 2015 (2015-02-15), Seiten 522-525 offenbart eine Anordnung zur Überlagerung von räumlich und zeitlich aufgespaltenen ultrakurzen Laserpulsen.

Der Erfindung liegt die Aufgabe zu Grunde, eine verbesserte Methode zur Erhöhung der Pulsenergie aufzuzeigen. Die oben beschriebenen Nachteile des Standes der Technik, insbesondere der starke Anstieg benötigter optischer Komponenten, sollen möglichst vermieden werden.

Die Erfindung schlägt ausgehend von einer optischen Anordnung der eingangs genannten Art eine optische Anordnung gemäß Anspruch 1 vor, worin eine Anzahl von zeitlich aufeinander folgenden Pulsen in einem einzigen Puls im Ausgangsstrahl überlagert werden.

Außerdem löst die Erfindung die Aufgabe durch ein Verfahren zur Erhöhung der Pulsenergie von Lichtpulsen gemäß Anspruch 8.

Erfindungsgemäß werden dabei die zeitlich aufeinander folgenden Pulse in einen einzigen Puls im Ausgangsstrahl überlagert.

In dem hier beschriebenen Ansatz werden mehrere von einem Lasersystem emittierte und zeitlich getrennte Pulse eines Pulszuges (im Folgenden Eingangspulszug genannt) mit Hilfe einer geeigneten Anordnung zu einem einzelnen Puls kombiniert. Ein getrennter Aufteilungsschritt eines einzelnen Pulses in mehrere Pulsreplikate findet nicht mehr statt. Der Eingangspulszug soll dabei aus N Pulsen bestehen, wobei N eine Potenz der Zahl 2 darstellt (N=2, 4, 8, ...). Die einzelnen Pulse sind zeitlich äquidistant, was z.B. bei Pulsen der Fall ist, die von modengekoppelten Laseroszillatoren emittiert werden.

Um die angestrebte Kombination der Pulse zu erreichen, findet zuerst eine räumliche Aufteilung des Eingangspulszuges in zwei räumlich getrennte Teilstrahlen statt, in denen sich jeweils ein optisches Element, z.B. ein optischer Verstärker bzw. mehrere räumlich getrennte Verstärker (mit entsprechender Pulsaufteilung und -kombination) befinden können. Anstelle von optischen Verstärkern können hier auch Komponenten zur spektralen Verbreiterung oder andere optische Komponenten verwendet werden. In diesen beiden Teilstrahlen werden, jeweils über einen geeigneten Mechanismus, z.B. mit Hilfe elektrooptischer Modulatoren, relative Phasen auf die Pulszüge aufgeprägt. Dabei wird jedem Lichtpuls innerhalb des Pulszuges eine eigene relative Phase zugeordnet, deren Gesamtheit im Folgenden als (statische) Phasenmuster bezeichnet wird und deren Ableitung später erklärt wird. Über eine Anordnung von Intensitätsstrahlteilern oder Polarisationsstrahlteilern und Wellenplatten können die beiden räumlich getrennte Strahlen in einen einzelnen Ausgangsstrahl und die zeitlich getrennten Pulse der Pulszüge mit Hilfe optischer Verzögerungsstrecken geeigneter Länge zu einem einzelnen Lichtpuls kombiniert werden. Dabei werden für N Pulse log₂(N) verschieden lange Verzögerungstrecken benötigt. Die kürzeste der Verzögerungsstrecken erzeugt dabei eine Propagationszeitdifferenz die dem minimalen zeitlichen Abstand zweier Pulse innerhalb des Pulszuges entspricht. Alle weiteren Verzögerungsstrecken sind jeweils immer doppelt so lang wie die Vorherige. Dabei bewirken die anzulegenden Phasenmuster, dass die Pulse im räumlich überlagerten Strahl zu einem einzelnen Puls zeitlich überlagert werden. Die räumliche Abfolge der Verzögerungsstrecken ist frei wählbar unter Verwendung des jeweils korrekten Phasenmuster. Bestehen zwischen den einzelnen Pulsen des Eingangspulszuges zusätzliche zeitlich variierende Phasenunterschiede, so können diese durch Modifikation der durch die Modulatoren aufgeprägten statischen Phasenmuster mit dynamischen Phasenmustern ausgeglichen werden. Darüber hinaus sollten die Längen der einzelnen Wegstrecken in der Kombinationsanordnung auf die zeitlichen Pulsabstände angepasst werden. Dies kann durch eine aktive Kontrolle der entsprechenden Weglängen mittels geeigneter Stellelemente realisiert werden, sowie ebenfalls durch Modifikation des Eingangspulszuges mit Hilfe der vorhandenen oder zusätzlich eingebrachten Phasenmodulatoren erfolgen.

Die benannten statischen Phasenmuster lassen sich durch gedachte Aufspaltung eines einzelnen Lichtpulses in die Pulsfolgen der zwei Teilstrahlen durch umgekehrte Ausbreitung durch die Elemente zur zeitlichen und räumlichen Überlagerung ableiten. Die relative optische Phase eines jeden einzelnen Pulses innerhalb eines Pulszuges ergibt sich dabei durch das Zählen der benötigten Reflexionen an Strahlteilern, die zur Erzeugung dieses Pulses benötigt wird. Die Zahl der Reflexionen wird mit dem Ausdruck π/2 multipliziert und durch 2π geteilt mit Rest (Modulo 2π). Eine weitere Berechnungsmöglichkeit stellt der Differential Coding Algorithmus dar, der im Zusammenhang mit einem Ausführungsbeispiel später erläutert wird.

Erfindungsgemäß sind zwei oder mehr räumlich voneinander getrennte optische Elemente vorgesehen, wobei durch jedes der optischen Elemente jeweils einer der Teilstrahlen propagiert. Dadurch lassen sich die Pulse der beiden Teilstrahlen vollständig getrennt voneinander beeinflussen. Der Aufbau kann faserbasiert realisiert werden.

Wenigstens eines der optischen Elemente kann in einer möglichen Ausgestaltung ein optischer Verstärker, ein nichtlineares optisches Element zur spektralen Verbreiterung, eine Linse, ein Spiegel oder ein Lichtmodulator sein.

Außerdem ist, wie oben erwähnt, in jedem Teilstrahl - vor oder hinter dem optischen Element - ein Phasenanpassungselement vorgesehen, das die Phase der Strahlung wenigstens eines Teilstrahls beeinflusst. Dabei ist das Phasenanpassungselement ein Phasenmodulator (z.B. ein elektrooptischer Modulator), der die relative Phase der Pulse von Lichtpuls zu Lichtpuls variiert und dadurch die geforderten Phasenmuster auf die Pulszüge aufprägt.

Das Kombinationselement umfasst eine Mehrzahl von in Strahlrichtung hintereinander angeordneten Strahlteilern, wobei die Pulse zwischen den Strahlteilern Verzögerungsstrecken durchlaufen. Für die Überlagerung von N aufeinander folgenden Pulsen müssen dabei log₂(N) Verzögerungsstrecken vorgesehen sein. Die Verzögerungsstrecken sollten unterschiedliche Längen haben, damit die an einem der Strahlteiler zur Überlagerung gebrachten Pulse, die diesem Strahlteiler über die unterschiedlich langen Verzögerungsstrecken zugeführt werden, relativ zueinander eine geeignete zeitliche Verzögerung aufweisen, so dass im Ergebnis die zeitlich aufeinanderfolgenden Pulse des Eingangspulszuges im Ausgangspulszug überlagert werden.

Vorzugsweise ist zur Einstellung und Regelung der Überlagerung der Pulse wenigstens ein Stellelement vorgesehen, das zur Verstellung der Länge einer diesem Stellelement zugeordneten Verzögerungsstrecke geeignet ist. Zweckmäßig ist zu jedem Strahlteilerpaar des Kombinationselementes ein solches Stellelement vorgesehen, das die Länge einer der (beiden) Verzögerungsstrecken zwischen den Strahlteilern verstellt.

Ausführungsbeispiele der Erfindung werden im Folgenden anhand der Zeichnungen näher erläutert. Es zeigen:
- Fig. 1:: optische Anordnung für die Aufteilung eines Eingangspulszuges in zwei räumlich getrennte Kanäle mit jeweils einem Phasenmodulator,
- Fig. 2:: optische Anordnung für die Kombination mit Hilfe von Intensitätsstrahlteilern für N Pulsreplikate,
- Fig. 3:: optische Anordnung gemäß Fig. 2 für 3 Pulsreplikate,
- Fig. 4:: optische Anordnung für die Kombination mit Hilfe von Polarisationsstrahlteilern für N Pulsreplikate.

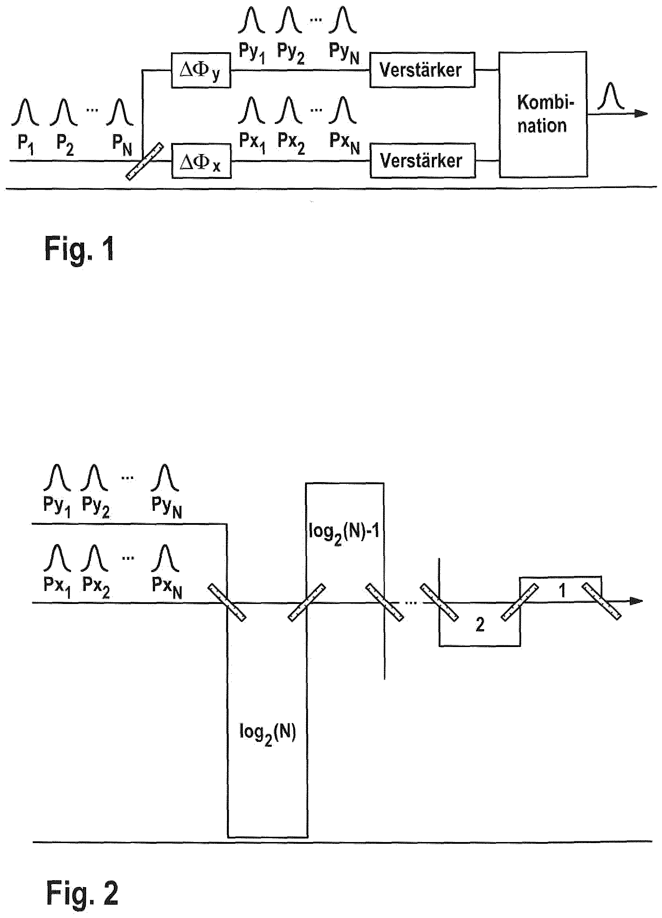

In der Figur 1 ist der Aufbau für die Aufteilung eines aus N Pulsen P₁ - P_{N} bestehender Eingangspulszug in zwei räumlich getrennte Teilstrahlen mit den Pulsen Px_{N} bzw. Py_{N} mit jeweils einem Phasenmodulator ΔΦₓ und ΔΦ_{y} dargestellt, der die entsprechenden Phasenmuster für die folgende räumliche und zeitliche Kombination erzeugt. Als Beispiel enthält jeder Kanal einen optischen Verstärker.

Anstelle von optischen Verstärkern können hier auch Komponenten zur spektralen Verbreiterung oder andere optische Komponenten verwendet werden. In den beiden Teilstrahlen werden jeweils über einen geeigneten Mechanismus, z.B. mit Hilfe elektrooptischer Modulatoren, zeitliche statische Phasenmuster auf die Pulszüge aufgeprägt. Dabei wird jedem Lichtpuls des Pulszuges eine eigene Phase zugeordnet. Über eine Anordnung aus Intensitätsstrahlteilern oder Polarisationsstrahlteilern und Wellenplatten werden die beiden räumlich getrennte Strahlen in einem einzelnen Ausgangsstrahl und die zeitlich getrennten Pulse der Pulszüge mit optischen Verzögerungsstrecken zu einem einzelnen Lichtpuls kombiniert. Dabei werden für N Pulse log₂(N) Verzögerungstrecken benötigt. Jede dieser Verzögerungsstrecken erzeugt eine Differenz der Propagationszeiten für die Pulse. Die Propagationszeitdifferenzen dieser Strecken werden dabei in diesem Beispiel vom Eingangspulszug her gesehen immer halbiert, wobei die kürzeste Propagationszeitdifferenz dem zeitlichen Abstand zweier aufeinanderfolgender Pulse des Eingangspulszuges entspricht. Im Allgemeinen ist die räumliche Abfolge der Verzögerungsstrecken frei wählbar unter Verwendung des jeweils erforderlichen Phasenmusters.

In der Figur 2 ist beispielhaft der Aufbau für die Kombination mit Hilfe von Intensitätsstrahlteilern für N Pulse dargestellt. Als Intensitätsstrahlteiler werden optische Komponenten bezeichnet, die einen Eingangspuls in zwei Pulse aufteilen, wobei die Polarisationseigenschaften erhalten bleiben. Eine solche Komponente kann andersherum auch als Kombinationselement verwendet werden, um zwei Eingangspulse mit gleichen Polarisationseigenschaften in einen Lichtpuls zu kombinieren. Das Verhältnis der Pulsenergien der Pulse ist dabei in den meisten Fällen 1:1, kann aber in bestimmten Fällen auch abweichend gewählt werden. Es wird angenommen, dass bei jeder Reflexion an einem dieser Strahlteiler ein Phasensprung von π/2 auftritt.

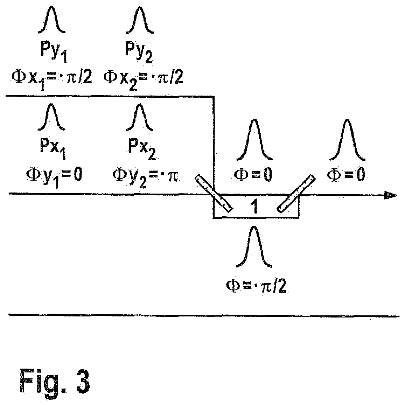

Als Beispiel kann ein Aufbau mit N=2 Eingangspulsen betrachtet werden, wie in Figur 3 dargestellt. Dieser erfordert eine Verzögerungsstrecke. Die zwei Eingangspulse Px₂ und Py₂ interferieren gemäß der jeweils eingestellten Phase am ersten Intensitätsstrahlteiler unter Berücksichtigung des auftretenden Phasensprungs für den folgenden langen Weg der Verzögerungsstrecke 1 konstruktiv und für den kurzen Weg destruktiv. Für die Pulse Px₁ und Py₁ passiert entsprechend das Gegenteil. Damit befindet sich in beiden Wegen der Verzögerungsstrecke 1 nur noch jeweils ein Lichtpuls. Am zweiten Intensitätsstrahlteiler interferieren diese beiden Pulse konstruktiv in Ausgangsrichtung zu einem einzelnen Lichtpuls. Entsprechend kann die Anzahl der Eingangspulse und der Verzögerungsstrecken erhöht werden.

Im Fall für N Pulse und einer Folge optischer Verzögerungsstrecken absteigender Länge kann das zu erstellende statische Phasenmuster für die zwei räumlich getrennten Pulszüge gemäß des bereits erklärten Algorithmus oder auch mit Hilfe des Differential-Coding Algorithmus berechnet werden. Für Letzteren werden die zeitlich getrennten Pulse Pxi und Pyi (erster und zweiter räumlicher Pulszug) mit den Zahlen 0 bis N-1 in Binärschreibweise nummeriert, wobei N-1 der zeitlich erste Lichtpuls und 0 der zeitlich letzte Lichtpuls ist. Zu diesen Werten wird die Zahl N addiert, um den zweiten räumlichen Pulszug Pyi zu behandeln. Für den ersten räumlichen Pulszug Pxi findet keine Addition statt, sondern es wird eine führende 0 zu der Zahl in Binärschreibweise ergänzt. Die Bitmuster Xxi und Xyi für den i-ten Lichtpuls werden mit Hilfe des Differential-Coding Algorithmus vom niederwertigsten zum höherwertigsten Bit berechnet, beginnend mit einer imaginären 0. Die Anzahl der gesetzten Bits in den Bitmustern wird mit dem Wert -π/2 multipliziert um die entsprechenden Phasen Φxᵢ und Φyᵢ für jeden Lichtpuls zu berechnen. In Tabelle 1 ist ein entsprechendes Beispiel für 4 zeitliche Pulse dargestellt.

**Tabelle 1: Phasenmuster für die Kombination von 4 zeitlichen Pulsen mit Hilfe von Intensitätsstrahlteilern**

| Puls | Puls in binärer Schreibweise | Puls + führende 0 für Pulszug Pxᵢ | Puls + Zahl N für Pulszug Pyᵢ | Differential-coding Muster Xxᵢ für Pulszug Pxᵢ | Differential-coding Muster Xyᵢ für Pulszug Pyᵢ | Φxᵢ | Φyᵢ |
|---|---|---|---|---|---|---|---|
| **1** | 00 | 000 | 100 | 000 | 100 | 0 | -π/2 |
| **2** | 01 | 001 | 101 | 011 | 111 | -π | -3π/2 |
| **3** | 10 | 010 | 110 | 110 | 010 | -π | -π/2 |
| **4** | 11 | 011 | 111 | 101 | 001 | -π | -π/2 |

Im allgemeinen Fall einer ungeordneten Folge optischer Verzögerungsstrecken kann das Phasenmuster durch theoretische Umkehr des Kombinationsprozesses

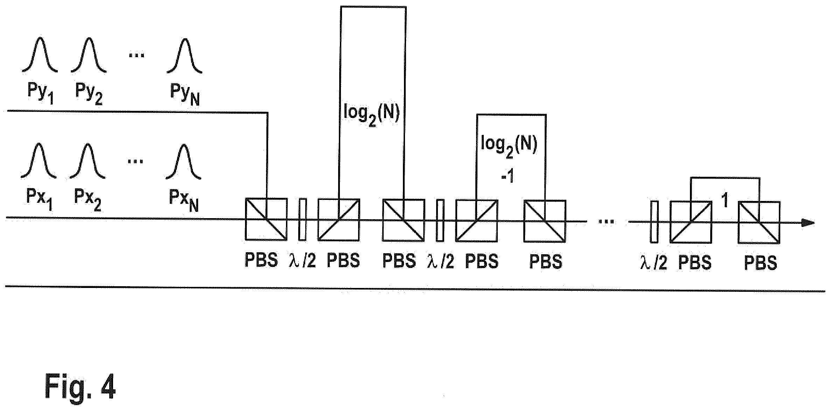

In der Figur 4 ist der Aufbau für die Kombination mit Hilfe von Polarisationsstrahlteilern PBS für N Pulsreplikate dargestellt.

Als Polarisationsstrahlteiler werden optische Komponenten bezeichnet, die einen Eingangspuls anhand seines Polarisationszustands in zwei Pulsreplikate aufteilen, z.B. die s-polarisierte Komponente reflektieren und die p-polarisierte Komponente transmittieren. Es wird wiederum angenommen, dass bei jeder Reflexion an einem dieser Strahlteiler ein Phasensprung von π/2 auftritt. Über Halbwellenplatten λ/2 kann der Polarisationszustand des Eingangspulses und somit das Teilungsverhältnis verändert werden. Für eine Halbwellenplatte mit einem Winkel von 22.5° bzgl. der p-Polarisationsachse ergibt sich eine Drehung der Eingangspolarisation eines p-polarisierten bzw. s-polarisierten Eingangspulses auf Winkel von 45° bzw. -45° bzgl. der p-Polarisationsachse. Damit ergibt sich bei einem folgenden Polarisationsstrahlteiler eine Teilung in zwei Pulse mit einem Verhältnis von 1:1. Wie im Aufbau mit Intensitätsstrahlteilern kann diese Kombination aus Strahlteiler und Halbwellenplatte als Kombinationselement für 2 Eingangspulse verwendet werden. Damit lässt sich der Aufbau mit Intensitätsstrahlteilern auf Polarisationsstrahlteiler übertragen. Dabei sind die Pulszüge Pxi und Pyi am Eingang p-polarisiert bzw. s-polarisiert, es ergibt sich also hinter dem ersten Polarisationsstrahlteiler ein Pulszug mit N Pulsen, die jeweils einen eigenen Polarisationszustand in Abhängigkeit der statischen Phasenmuster aufweisen. Die erforderlichen Phasenmuster für die beiden Pulszüge Pxi und Pyi lassen sich bei einem Aufbau gemäß Figur 4 wie bei der Kombination mit Intensitätsstrahlteilern gemäß Figur 3 anhand der in vorherigen Abschnitten beschriebenen Algorithmen berechnen.

In der vorstehenden Beschreibung zitierter Stand der Technik:
1. J. Limpert, F. Stutzki, F. Jansen, H.-J. Otto, T. Eidam, C. Jauregui, and A. Tünnermann, "Yb-doped large-pitch fibres: effective single-mode operation based on higher-order mode delocalisation," Light Sci. Appl. 1, e8 (2012).
2. D. Strickland and G. Mourou, "Compression of amplified chirped optical pulses," Opt. Commun. 56, 219-221 (1985).
3. D. N. Schimpf, T. Eidam, E. Seise, S. Hädrich, J. Limpert, and A. Tünnermann, "Circular versus linear polarization in laser-amplifiers with Kerrnonlinearity.," Opt. Express 17, 18774-81 (2009).
4. T. Y. Fan, "Laser beam combining for high-power, high-radiance sources," IEEE J. Sel. Top. Quantum Electron. 11, 567-577 (2005).
5. A. Klenke, S. Hädrich, M. Kienel, T. Eidam, J. Limpert, and A. Tünnermann, "Coherent combination of spectrally broadened femtosecond pulses for nonlinear compression.," Opt. Lett. 39, 3520-2 (2014).
6. S. Zhou, F. W. Wise, and D. G. Ouzounov, "Divided-pulse amplification of ultrashort pulses," Opt. Lett. 32, 871 (2007).
7. A. Klenke, M. Kienel, T. Eidam, S. Hädrich, J. Limpert, and A. Tünnermann, "Divided-pulse nonlinear compression," Opt. Lett. 38, 4593-6 (2013).
8. I. Pupeza, T. Eidam, J. Rauschenberger, B. Bernhardt, A. Ozawa, E. Fill, A. Apolonski, T. Udem, J. Limpert, Z. A. Alahmed, A. M. Azzeer, A. Tünnermann, T. W. Hänsch, and F. Krausz, "Power scaling of a high-repetition-rate enhancement cavity," Opt. Lett. 35, 2052-2054 (2010).
9. Tong Zhou, John Ruppe, Cheng Zhu, I-Ning Hu, John Nees, and Almantas Galvanauskas, "Coherent pulse stacking amplification using low-finesse Gires-Tournois interferometers," Opt. Express 23, 6, 7442-7462 (2015)
10. F. Guichard, Y. Zaouter, M. Hanna, K.-L. Mai, F. Morin, C. Hönninger, E. Mottay, and P. Georges, "High-energy chirped- and divided-pulse Sagnac femtosecond fiber amplifier.," Opt. Lett. 40, 89-92 (2015).
11. M. Kienel, A. Klenke, T. Eidam, S. Hädrich, J. Limpert, and A. Tünnermann, "Energy scaling of femtosecond amplifiers using actively controlled divided-pulse amplification.," Opt. Lett. 39, 1049-52 (2014).

## Patentansprüche

1. Optische Anordnung zur Überlagerung einer Sequenz von zeitlich äquidistant folgenden Lichtpulsen innerhalb eines Lichtstrahls zu einem einzelnen Lichtpuls mit
- einem Aufteilungselement, das den Lichtstrahl in zwei Teilstrahlen aufteilt,
- zwei räumlich voneinander getrennten optischen Elementen, wobei durch jedes der optischen Elemente jeweils einer der Teilstrahlen propagiert, und
- wenigstens einem Kombinationselement, das die Teilstrahlen in einem Strahl räumlich überlagert, wobei das Kombinationselement eine Anzahl der zeitlich aufeinander folgenden Lichtpulse in einem einzigen Lichtpuls im Ausgangsstrahl überlagert, wobei das Kombinationselement eine Mehrzahl von in Strahlrichtung hintereinander angeordneten Strahlteilern aufweist, wobei die Lichtpulse zwischen den Strahlteilern Verzögerungsstrecken durchlaufen,
**dadurch gekennzeichnet, dass** in jedem Teilstrahl in Strahlrichtung vor oder hinter dem optischen Element ein Phasenanpassungselement angeordnet ist, wobei das Phasenanpassungselement ein Phasenmodulator ist, der die Phase der Lichtpulse von Lichtpuls zu Lichtpuls variiert und so jedem Lichtpuls eine eigene relative Phase zuordnet, deren Gesamtheit ein Phasenmuster bildet, das bewirkt, dass die Anzahl von Lichtpulsen in dem räumlich überlagerten Strahl zu dem einzelnen Lichtpuls überlagert werden, wobei die verschiedenen Strahlteilerpaaren zugeordneten Verzögerungsstrecken unterschiedlich lang sind.

2. Optische Anordnung nach Anspruch 1, **dadurch gekennzeichnet, dass** die optischen Elemente optische Fasern sind, wobei jede der Fasern jeweils einen der Teilstrahlen führt.

3. Optische Anordnung nach einem der Ansprüche 1 oder 2, **dadurch gekennzeichnet, dass** das wenigstens ein optisches Element ein optischer Verstärker, ein nichtlineares optisches Element zur spektralen Verbreiterung, ein Spiegel, ein Lichtmodulator oder eine Linse ist.

4. Optische Anordnung nach einem der Ansprüche 1 bis 3, **dadurch gekennzeichnet, dass** für N Lichtpulse log₂(N) unterschiedlich lange Verzögerungsstrecken vorgesehen sind.

5. Optische Anordnung nach einem der Ansprüche 1 bis 4, **gekennzeichnet durch** wenigstens ein Stellelement, das zur Verstellung der Länge einer diesem Stellelement zugeordneten Verzögerungsstrecke geeignet ist.

6. Optische Anordnung nach einem der Ansprüche 1 bis 5, **dadurch gekennzeichnet, dass** die Strahlteiler Polarisationsstrahlteiler sind, wobei sich zwischen den Strahlteilern Halbwellenplatten befinden.

7. Optische Anordnung nach einem der Ansprüche 1 bis 6, **dadurch gekennzeichnet, dass** die Strahlteiler Intensitätsstrahlteiler sind.

8. Verfahren zur Erhöhung der Pulsenergie von Lichtpulsen, mit den Verfahrensschritten:
- Erzeugen einer Lichtpulsfolge, bestehend aus einer Abfolge von zeitlich äquidistanten Lichtpulsen in einem Eingangsstrahl,
- Aufteilen der Lichtpulse auf zwei räumlich getrennte Teilstrahlen, wobei jeder der Teilstrahlen jeweils durch eines von zwei räumlich getrennten optischen Elementen propagiert.
- räumliche Überlagerung der Teilstrahlen in einem Ausgangsstrahl, wobei eine Anzahl der zeitlich aufeinanderfolgenden Lichtpulse in einem einzigen Lichtpuls im Ausgangsstrahl überlagert werden, wobei die Überlagerung der Lichtpulse im Ausgangsstrahl mittels einer Mehrzahl von in Strahlrichtung hintereinander angeordneten Strahlteilern erfolgt, wobei die Lichtpulse zwischen den Strahlteilern Verzögerungsstrecken durchlaufen
**dadurch gekennzeichnet, dass** die Phasen der Lichtpulse in jedem der Teilstrahlen durch einen in Strahlrichtung vor oder hinter dem optischen Element angeordneten Phasenmodulator von Lichtpuls zu Lichtpuls gesteuert werden, so dass jedem Lichtpuls eine eigene relative Phase zugeordnet wird, deren Gesamtheit ein Phasenmuster bildet, das bewirkt, dass die Anzahl von Lichtpulsen in dem räumlich überlagerten Strahl zu dem einzelnen Lichtpuls überlagert werden, wobei die verschiedenen Strahlteilerpaaren zugeordneten Verzögerungsstrecken unterschiedlich lang sind.

9. Verfahren nach Anspruch 8, **dadurch gekennzeichnet, dass** die relative Phase für jeden einzelnen Lichtpuls durch Division mit Rest durch 2π des Produktes aus der Anzahl der Reflexionen an Strahlteilern für diesen Lichtpuls mit π/2 bestimmt wird.

10. Verfahren nach Anspruch 8, **dadurch gekennzeichnet, dass** die relative Phase für jeden einzelnen Lichtpuls nach dem Differential Coding Algorithmus bestimmt wird.

## Claims

1. Optical arrangement for superimposing a sequence of light pulses following each other equidistantly in time within a light beam to a single light pulse having
- a splitting element, which splits the light beam into two partial beams,
- two optical elements spatially separated from one another, wherein through each of the optical elements each of the partial beams propagates, and
- at least one combining element, which spatially superimposes the partial beams in a beam, wherein the combining element superimposes a number of the temporally successive light pulses in a single light pulse in the output beam, wherein the combining element has a plurality of beam splitters arranged one behind the other in the beam direction, wherein the light pulses pass through delay lines between the beam splitters,
**characterized in**
**that** in each partial beam in the beam direction in front of or behind the optical element is arranged a phase-matching element, wherein the phase-matching element is a phase modulator which changes the phase of the light pulses from light pulse to light pulse and thus assigns each light pulse its own relative phase, the totality of which forms a phase pattern which causes that the number of light pulses in the spatially superimposed beam is superimposed to the individual light pulse, whereby the different delay distances assigned to the different beam splitter pairs are of different lengths.

2. Optical arrangement according to claim 1, **characterized in that** the optical elements are optical fibers, whereby each of the fibers guides one of the partial beams.

3. Optical arrangement according to claim 1 or 2, **characterized in that** the at least one optical element is an optical amplifier, a non-linear optical element for spectral broadening, a mirror, a light modulator or a lens.

4. Optical arrangement according to any one of claims 1 to 3, **characterized in that** log₂(N) delay distances of different lengths are provided for N light pulses.

5. Optical arrangement according to any one of claims 1 to 4, **characterized by** at least one adjusting element which is suitable for adjusting the length of a delay distance assigned to this adjusting element.

6. Optical arrangement according to any one of claims 1 or 5, **characterized in that** the beam splitters are polarization beam splitters, whereby half-wave plates are located between the beam splitters.

7. Optical arrangement according to any one of claims 1 or 6, **characterized in that** the beam splitters are intensity beam splitters.

8. Method for increasing the pulse energy of light pulses, having the method steps:
- generation of a light pulse sequence consisting of a sequence of temporally equidistant light pulses in an input beam,
- distribution of the light pulses to two spatially separated partial beams, whereby each of the partial beams propagates through one of two spatially separated optical elements,
- spatial superposition of the partial beams in an output beam, whereby a number of the temporally successive light pulses are superimposed into a single light pulse in the output beam, whereby the superposition of the light pulses in the output beam is effected by means of several beam splitters arranged one after the other in the beam direction, whereby the light pulses pass through delay distances between the beam splitters
**characterized in**
**that** the phases of the light pulses in each of the partial beams are controlled from light pulse to light pulse by a phase modulator located in the direction of beam in front of or behind the optical element, so that each pulse of light is assigned its own relative phase, the totality of which forms a phase pattern which causes that the number of light pulses in the spatially superimposed beam is superimposed to the individual light pulse, whereby the different delay distances assigned to the different beam splitter pairs are of different lengths.

9. Method according to claim 8, **characterized in that** the relative phase for each individual light pulse is determined by division with remainder by π/2 of the product of the number of reflections at beam splitters for this light pulse by π/2.

10. Method according to claim 8, **characterized in that** the relative phase for each individual light pulse is determined according to the differential coding algorithm.

## Revendications

1. Dispositif optique permettant de superposer une séquence d'impulsions lumineuses équidistantes dans le temps à l'intérieur d'un faisceau lumineux en une seule impulsion lumineuse avec
- un élément de division, qui divise le faisceau lumineux en deux faisceaux partiels,
- deux éléments optiques séparés l'un de l'autre dans l'espace, chacun des éléments optiques étant traversé par l'un des faisceaux partiels, et
- au moins un élément de combinaison qui superpose spatialement les faisceaux partiels en un seul faisceau, l'élément de combinaison superposant un certain nombre des impulsions lumineuses qui se succèdent dans le temps en une seule impulsion lumineuse dans le faisceau de sortie, l'élément de combinaison comprenant une pluralité de diviseurs de faisceau disposés les uns derrière les autres dans la direction du faisceau, les impulsions lumineuses parcourent des trajets de décélération entre les diviseurs de faisceaux,
**caractérisé en ce que**
dans chaque faisceau partiel, dans la direction du faisceau, devant ou derrière l'élément optique un élément d'adaptation de phase est disposé, le élément d'adaptation de phase est un modulateur de phase qui modifie la phase des d'une impulsion lumineuse à l'autre et donne ainsi à chaque impulsion lumineuse sa propre phase relative, dont l'ensemble forme un modèle de phase qui fait que le nombre d'impulsions lumineuses dans le faisceau spatialement superposé est superposé à l'impulsion lumineuse unique, les trajets de décélération associées aux différentes paires de diviseurs de faisceau étant longueur différentes.

2. Dispositif optique selon la revendication 1, **caractérisé en ce que** les éléments optiques sont des fibres optiques, chacune des fibres guidant respectivement l'un des faisceaux partiels.

3. Dispositif optique selon l'une des revendications 1 ou 2, **caractérisé en ce que** ledit au moins un élément optique est un amplificateur optique, un élément optique non linéaire d'élargissement spectral, un miroir, un modulateur de lumière ou une lentille.

4. Dispositif optique selon l'une des revendications 1 à 3, **caractérisé en ce que** log₂(N) de trajets de décélération de longueurs différentes sont prévues pour N impulsions lumineuses.

5. Dispositif optique selon l'une des revendications 1 à 4, **caractérisé par** au moins un élément de réglage qui est approprié pour le réglage de la longueur d'un trajet de décélération associé à cet élément de réglage.

6. Dispositif optique selon l'une des revendications 1 à 5, **caractérisé en ce que** les diviseurs de faisceau sont des diviseurs de faisceau de polarisation, des plaques demi-onde étant situées entre les diviseurs de faisceau.

7. Dispositif optique selon l'une des revendications 1 à 6, **caractérisé en ce que** les diviseurs de faisceau sont des diviseurs de faisceau à intensité.

8. Procédé pour augmenter l'énergie d'impulsions lumineuses, avec les étapes de procédé:
- Génération d'un train d'impulsions lumineuses composé d'une succession d'impulsions lumineuses équidistantes dans le temps dans un faisceau d'entrée,
- répartition des impulsions lumineuses sur deux faisceaux partiels séparés dans l'espace, chacun des faisceaux partiels se propageant respectivement à travers l'un des deux éléments optiques séparés dans l'espace
- superposition spatiale des faisceaux partiels dans un faisceau de sortie, un certain nombre des impulsions lumineuses se succédant dans le temps étant superposées en une seule impulsion lumineuse dans le faisceau de sortie, la superposition des impulsions lumineuses dans le faisceau de sortie s'effectuant au moyen d'une pluralité de diviseurs de faisceau disposés les uns derrière les autres dans la direction du faisceau, les impulsions lumineuses parcourant des trajets de décélération entre les diviseurs de faisceau
**caractérisé en ce que**
les phases des impulsions lumineuses dans chacun des faisceaux partiels sont commandées d'une impulsion lumineuse à l'autre par un modulateur de phase disposé en amont ou en aval de l'élément optique dans la direction du faisceau, de sorte que chaque impulsion lumineuse est associée une phase relative propre dont l'ensemble forme un modèle de phase qui fait que le nombre d'impulsions lumineuses dans le faisceau spatialement superposé est superposé à l'impulsion lumineuse unique, les trajets de décélération associées aux différentes paires de diviseurs de faisceau étant de longueurs différentes.

9. Procédé selon la revendication 8, **caractérisé en ce que** la phase relative pour chaque impulsion lumineuse individuelle est déterminée en divisant avec le reste par π/2 le produit du nombre de réflexions sur des diviseurs de faisceau pour cette impulsion lumineuse par π/2.

10. Procédé selon la revendication 8, **caractérisé en ce que** la phase relative est déterminée pour chaque impulsion lumineuse individuelle selon l'algorithme de codage différentiel.
